# EUROPÄISCHE PATENTSCHRIFT

(11) **EP 2 792 520 B1**
(45) Veröffentlichungstag und Bekanntmachung des Hinweises auf die Patenterteilung: **25.03.2015**
(21) Anmeldenummer: 13164547.5
(22) Anmeldetag: 19.04.2013
(51) Int. Cl.: B60J 10/00, B60J 10/08

(54) **Dichtungsprofil und Türanordnung mit einem solchen Dichtungsprofil**
Sealing profile and door assembly with such a sealing profile
Profil d'étanchéité et agencement de porte doté d'un tel dispositif d'étanchéité

(43) Veröffentlichungstag der Anmeldung: 22.10.2014
(73) Patentinhaber: Trelleborg Sealing Profiles Germany GmbH, 63920 Großheubach (DE)
(72) Erfinder: Köss,Gerd, 26897 Breddenberg (DE); Haass,Bernhard, 74821 Mosbach-Lohrbach (DE)
(74) Vertreter: Flügel Preissner Kastel Schober

(56) Entgegenhaltungen:
- DE-A1- 10 133 417
- DE-A1- 10 138 241
- GB-A- 2 271 955
- US-A1- 2002 152 687

## Beschreibung

Die vorliegende Erfindung betrifft ein Dichtungsprofil zum Abdichten eines Spalts zwischen einer Wand und einer Tür, insbesondere für ein Reisemobil oder einen Wohnwagen. Das Dichtungsprofil hat einen Haltebereich, mittels welchem das Dichtungsprofil an der Wand befestigbar ist, und einen Kontaktbereich, der verformbar ist und der zur Anordnung in dem Spalt vorgesehen ist. Ferner betrifft die vorliegende Erfindung eine Türanordnung, insbesondere für ein Reisemobil oder einen Wohnwagen, die eine Wand, eine Tür und das Dichtungsprofil, das an der Wand befestigt ist, umfasst.

Reisemobile oder Wohnwagen besitzen häufig eine Tür, die gegenüber einer Wand des Reisemobils oder Wohnwagens schwenkbar ist. Bei geschlossener Tür befindet sich oft ein Spalt zwischen der Tür und der Wand, der durch eine Dichtung abgedichtet wird. DE 200 16 843 U1 und DE 101 38 241 A1 beschreiben solche Dichtungen. Die Dichtungen sind an einer Zarge der Wand befestigt und weisen einen hohlen Dichtkörper auf, der bei geschlossener Tür durch die Tür komprimiert wird. Durch die Kompression des Dichtkörpers wird die Abdichtwirkung erzielt.

DE 101 33 417 A1 zeigt eine gummielastische Dichtung, die ein aus Moosgummi bestehendes Hohlprofil mit einer im Anlagebereich einer Fahrzeugtür angeordneten Abdeckung aus einer EPDM-Schicht. US 2002 /0152687 A1 offenbart einen Verbunddichtungsstreifen, der mit einer Pulverbeschichtung versehen ist. GB 2 271 955 A zeigt eine Dichtung, welche einen Befestigungsbereich und einen hohlen Dichtbereich aufweist.

Aufgabe der Erfindung ist es, eine verbesserte Dichtwirkung zu erzielen.

Die Aufgabe wird durch das Dichtungsprofil nach Anspruch 1 und die Türanordnung nach Anspruch 11 gelöst.

Vorteilhafte Ausgestaltungen sind Gegenstand der Ansprüche 2 bis 10 und 12 bis 14.

Das erfindungsgemäße Dichtungsprofil, insbesondere für ein Reisemobil oder einen Wohnwagen, ist zum Abdichten eines Spalts zwischen einer Wand und einer Tür vorgesehen. Das Dichtungsprofil umfasst einen Haltebereich, mittels welchem das Dichtungsprofil an der Wand befestigbar ist, und einen Kontaktbereich, der verformbar ist und der zur Anordnung in dem Spalt vorgesehen ist. Der Kontaktbereich weist eine erste Seite, die dem Haltebereich abgewandt ist, und eine zweite Seite auf, die dem Haltebereich zugewandt ist und mit diesem verbunden ist. Der Kontaktbereich ist auf der ersten Seite zumindest abschnittsweise mit einer Beschichtung versehen, die reibungs- und/oder haftvermindemd ist. Der Kontaktbereich weist auf der ersten Seite eine erste Seitenfläche und eine zweite Seitenfläche sowie auf der zweiten Seite eine dritte Seitenfläche oder eine vierte Seitenfläche auf. Der Kontaktbereich weist einen Vorsprung auf, der in Verlängerung der ersten Seitenfläche angeordnet ist. An dem Vorsprung ist ein Anschlag vorgesehen, der in Richtung des Haltebereichs von dem Vorsprung vorsteht.

Unter Reisemobilen oder Wohnwagen sollen vorzugsweise diejenigen Fahrzeuge verstanden werden, bei denen ein Verwender eine Möglichkeit zum Schlafen oder Wohnen in diesem Fahrzeug hat. Dies können beispielsweise Reisemobile, Wohnmobile, Caravane oder Campingfahrzeuge auf der einen Seite und Wohnwagen oder Campinganhänger auf der anderen Seite sein. Eine Motorisierung der Fahrzeuge ist demnach nicht erforderlich.

Das Dichtungsprofil, das bevorzugt strangförmig ist, dient vorzugsweise zum Abdichten eines Spalts zwischen einer Wand und einer Tür, wenn die Tür geschlossen ist (Schließstellung). Der Haltebereich dient vorzugsweise zur Befestigung des Dichtungsprofils an der Wand, wobei vorzugsweise die Wand eine Zarge umfasst, an der der Haltebereich befestigt ist. Die Dichtwirkung wird vorzugsweise durch den Kontaktbereich erzielt, der bei geschlossener Tür durch die Tür verformt wird und so ein guter Dichtschluss zwischen der Tür und der Wand erzielt werden kann. Die erste Seite, also jene Seite, die der Tür zugewandt ist, ist zumindest abschnittsweise mit einer Beschichtung versehen. Die zweite Seite, die dem Haltebereich zugewandt ist und mit diesem verbunden ist, ist vorzugsweise nicht mit der Tür, sondern lediglich mit der Wand in Kontakt.

Verformbar soll in diesem Zusammenhang vorzugsweise bedeuten, dass der Kontaktbereich elastisch biegsam oder elastisch komprimierbar sein soll.

Die Beschichtung ist reibungs- und/oder haftvermindernd, so dass vorzugsweise die Reibung zwischen der Tür und dem Kontaktbereich im Vergleich zu einem Kontaktbereich ohne Beschichtung verringert wird. Dies hat den Vorteil, dass der Kontaktbereich weniger wahrscheinlich beim Schließen der Tür an der Tür haften bleibt, so dass der Kontaktbereich durch die Haft- oder Reibungskraft zwischen Tür und Kontaktbereich in Schließrichtung der Tür verformt wird. Dies hätte den Nachteil, dass der Kontaktbereich derart verformt werden kann, dass er nicht mehr vollständig an der Tür beziehungsweise der Wand anliegt, so dass die Dichtwirkung vermindert wäre.

Die Beschichtung hat somit den bevorzugten Vorteil, dass der Kontaktbereich beim Schließen der Tür durch die Tür lediglich komprimiert oder verformt wird, ohne verzerrt oder deformiert zu werden, so dass der Kontaktbereich großflächig an der Tür und an der Wand anliegt. Dies hat zur Folge, dass eine hohe Dichtwirkung erzielt werden kann.

Die Beschichtung ist vorzugsweise in einer Aussparung an der ersten Seite des Kontaktbereichs angeordnet. Weiter vorzugsweise sind die Dicke der Beschichtung und die Tiefe der Aussparung derart gewählt, dass die Beschichtung flächenbündig zu dem übrigen Kontaktbereich ist, das heißt, dass die Beschichtung weder hervorsteht noch eingelassen ist. Alternativ bedeckt die Beschichtung die gesamte erste Seite oder ein der Tür zugewandter Teil (zum Beispiel eine erste Seitenfläche) der ersten Seite des Kontaktbereichs.

Das Vorsehen der Beschichtung an dem Kontaktbereich kann abschnittsweise erfolgen, das heißt, nur bestimmte Teile des strangförmigen Dichtungsprofils sind mit der Beschichtung versehen. Es ist jedoch bevorzugt, dass das Dichtungsprofil in seiner gesamten Länge mit der Beschichtung versehen ist. Ferner kann auch die Erstreckung der Beschichtung quer zur Längsausdehnung des Dichtungsprofils variiert werden. Beispielsweise ist die erste Seite zur Hälfte, zu 30 %, zu 75 % oder komplett mit der Beschichtung versehen.

Es ist bevorzugt, dass der Kontaktbereich einen Hohlraum aufweist. Ein Hohlraum bietet zum einen den Vorteil, dass der Kontaktbereich ohne größere Krafteinwirkung verformt werden kann, und zum anderen, dass ein Hohlraum gut thermisch isolierend wirkt.

Der Kontaktbereich weist auf der ersten Seite eine erste Seitenfläche und eine zweite Seitenfläche sowie auf der zweiten Seite eine dritte Seitenfläche oder eine vierte Seitenfläche auf, wobei vorzugsweise benachbarte Seitenflächen jeweils einen Winkel ≠ 0° einschließen.

Insbesondere wird der Hohlraum durch die vier Seitenflächen gebildet, so dass beim Verformen des Kontaktbereichs sich vorzugsweise die einzelnen Seitenflächen gegeneinander, insbesondere im Hinblick auf ihren Winkel zueinander, verschieben. Bevorzugt soll der Kontaktbereich an den Schnittstellen der Seitenflächen verformbar sein, so dass bei Krafteinwirkung auf den Kontaktbereich die Seitenflächen im Wesentlichen ihre ursprüngliche Form behalten und vornehmlich der Winkel zwischen den Seitenflächen durch Krafteinwirkung auf den Kontaktbereich verändert wird. Die Seitenflächen sind vorzugsweise im unbelasteten Zustand nur wenig gekrümmt.

Im unbelasteten Zustand schließen benachbarte Seitenflächen vorzugsweise jeweils einen Winkel ≠ 0° ein, was insbesondere bedeuten soll, dass benachbarte Seitenflächen gewinkelt zueinander und demnach nicht parallel zueinander angeordnet sind. Durch Krafteinwirkung auf den Kontaktbereich wird vorzugsweise der Winkel zwischen benachbarten Seitenflächen verändert. Dies hat den Vorteil, dass Seitenflächen gegen die Tür oder die Wand großflächig anliegen kann, so dass eine hohe Dichtwirkung erzielt werden kann. Die Verformung des Kontaktbereichs geschieht dann insbesondere durch Verformung an den Schnittpunkten der Seitenflächen.

Die dritte und/oder vierte Seitenfläche kann teilweise einen Ansatz des Haltebereichs enthalten. Dies bedeutet, dass die dritte und/oder vierte Seitefläche aus Teilen des Haltebereichs und des Kontaktbereichs aufgebaut ist. Dies bietet den Vorteil, dass der Ansatz des Haltebereichs die dritte und/oder vierte Seitenfläche stabilisiert, so dass der Kontaktbereich in die gewünschte Richtung weist.

Es ist bevorzugt, dass die Seitenflächen im Querschnitt im Wesentlichen rechteckförmig, insbesondere rautenförmig, angeordnet sind.

Im Wesentlichen rechteckförmig soll insbesondere bedeuteten, dass der eingeschlossene Winkel zwischen zwei benachbarten Seitenflächen zwischen 60° und 120° liegt. Wenn der Kontaktbereich an einem Schnittpunkt zweier Seitenflächen an dem Haltebereich angebracht ist, ist vorzugsweise eine Seitenfläche, insbesondere die erste Seitenfläche, gegenüber der Tür, in einem gedachten geschlossenen Zustand, unter einem Winkel geneigt. Durch die Krafteinwirkung der Tür auf den Kontaktbereich wird der Kontaktbereich bevorzugt derart verformt, dass die erste Seitenfläche parallel zur Tür ist, was einer großflächigen Anlage des Kontaktbereichs an der Tür gleichbedeutend ist. Gleichzeitig sind vorzugsweise auch die Seitenflächen, die dem Haltebereich zugewandt sind, im komprimierten Zustand des Kontaktbereichs parallel zu dem Haltebereich, so dass auch hier eine großflächige Anlage dieser Seitenflächen an dem Haltebereich erzielt werden kann.

Es ist bevorzugt, dass die Beschichtung an der ersten Seitenfläche angebracht ist. Die erste Seitenfläche ist, wie oben beschrieben, vorzugsweise die Seitenfläche, die beim Schließen der Tür mit der Tür zuerst in Kontakt kommt. Daher ist es sinnvoll, die Beschichtung an dieser Seitenfläche vorzusehen. Durch die Beschichtung wird vorzugsweise erreicht, dass die erste Seitenfläche nicht an der Tür haften bleibt und sich der Kontaktbereich zur Erzielung einer hohen Dichtwirkung beim Schließen der Tür wie gewünscht verformt.

Es ist bevorzugt, dass der Vorsprung mit der Beschichtung versehen ist. Es ist weiter bevorzugt, dass die Beschichtung ein Film aus Polyethylen (PE-Film) ist.

Der Vorsprung dient vorzugsweise dazu, die Anlagefläche zwischen dem Kontaktbereich und der Tür weiter zu vergrößern. Im unbelasteten Zustand des Kontaktbereichs erstreckt sich der Vorsprung bevorzugt in Verlängerung der ersten Seitenfläche und ist daher auch gegenüber der Tür, in einem gedachten geschlossenen Stellung, um einen Winkel geneigt. Nach dem Schließen der Tür befindet sich vorzugsweise der Vorsprung ebenso wie die erste Seitenfläche im Wesentlichen parallel zu der Tür, so dass eine besonders große Anlagefläche erzielt werden kann. Dies bietet insbesondere den Vorteil, eine besonders hohe Dichtwirkung zu erzielen. Das Vorsehen der Beschichtung auch auf dem Vorsprung bietet insbesondere den Vorteil, dass auch eine Anhaftung des Vorsprungs an der Tür oder die Erzeugung einer erhöhten Reibung zwischen Tür und Vorsprung vermieden werden kann.

Der Vorsprung ist vorzugsweise ähnlich wie der Kontaktbereich mit der Beschichtung versehen, das heißt, an Positionen, an denen der Kontaktbereich mit der Beschichtung versehen ist, weist auch der Vorsprung eine Beschichtung auf. Dies bedeutet, dass auch der Vorsprung abschnittweise oder gesamt mit der Beschichtung versehen ist. Ferner kann auch die Erstreckung der Beschichtung quer zur Längsausdehnung des Vorsprungs variiert werden. Beispielsweise ist der Vorsprung zur Hälfte, zu 30 %, zu 75 % oder komplett mit der Beschichtung versehen, so wie dies auch am Kontaktbereich selbst vorgesehen ist.

An dem Vorsprung ist ein Anschlag vorgesehen, der in Richtung des Haltebereichs von dem Vorsprung vorsteht. Der Anschlag kann in der Schließstellung der Tür an der zweiten Seitenfläche anliegen. Dies dient insbesondere dazu, den Vorsprung zu stützen, dass dieser auch an seinem freien Ende gegen die Tür anliegt.

Alternativ kann die Beschichtung eine Beflockung sein, die auf den Kontaktbereich aufgebracht ist.

Es ist bevorzugt, dass der Haltebereich im Querschnitt im Wesentlichen U-förmig ist, wobei vorzugsweise der Haltebereich einen ersten Schenkel, einen zweiten

Schenkel, der von dem ersten Schenkel durch einen Zwischenraum beabstandet ist, und einen an einem ersten Ende den ersten Schenkel und den zweiten Schenkel verbindenden Basisbereich aufweist. Weiter vorzugsweise ist an einer dem Zwischenraum zugewandten Innenfläche des ersten Schenkels und/oder des zweiten Schenkels wenigstens eine Rippe angeordnet.

Der erste Schenkel, der zweite Schenkel und der Basisbereich bilden vorzugsweise einen im Wesentlichen U-förmigen Haltebereich. Das erste Ende ist insbesondere das Ende des ersten und/oder zweiten Schenkels, das mit dem Basisbereich verbunden ist. Bevorzugt lässt sich der Haltebereich derart verformen, dass die Schenkel unter Verformung des Basisbereichs voneinander weg gebogen werden können, so dass ein im Querschnitt V-förmiger Haltebereich unter Kraftaufbrin gung erzielt werden kann. Dies bietet den Vorteil, dass der Haltebereich auf einen Befestigungsvorsprung der Wand oder der Zarge aufgebracht werden kann und dadurch an dem Befestigungsvorsprung befestigt ist.

Zwischen den Schenkeln des Haltebereichs ist vorzugsweise ein Zwischenraum vorgesehen, in dem ein Befestigungsvorsprung angeordnet werden kann. Die Schenkel weisen bevorzugt eine oder mehrere Rippen auf, die in Richtung des Zwischenraums von den Schenkeln vorstehen. Die Rippe kann sich entlang der Längsausdehnung der Profildichtung oder des Haltebereichs erstrecken oder kann nur abschnittsweise in Richtung der Längsausdehnung des Dichtungsprofils vorgesehen sein.

Es ist bevorzugt, dass das Dichtungsprofil einen Abdeckbereich und/oder einen Überlappbereich aufweist. Der Abdeckbereich ist vorzugsweise an einem zweiten Ende des ersten Schenkels angeordnet. Der Überlappbereich ist insbesondere als eine Dichtlippe ausgebildet und bevorzugt an einem zweiten Ende des zweiten Schenkels angeordnet. Weiter vorzugsweise weist der Abdeckbereich und/oder der Überlappbereich eine Sollknickstelle auf.

Insbesondere soll der Abdeckbereich an dem dem Basisbereich abgewandten Ende des ersten Schenkels angeordnet sein. Vorzugsweise erstreckt sich der Abdeckbereich bis zur Sollknickstelle in Richtung des ersten Schenkels. Nach der Sollknickstelle erstreckt sich der Abdeckbereich dann in einem Winkel gegenüber dem ersten Schenkel, das heißt, vorzugsweise ist der Abdeckbereich an der Sollknickstelle in Richtung der Wand abgewinkelt. Dadurch kann erreicht werden, dass der Abschnitt des Abdeckbereichs, der abgewinkelt ist, gegen die Wand gedrückt wird, wenn das Dichtungsprofil an der Wand befestigt ist. Dies hat den Vorteil, dass der Abdeckbereich fest an der Wand anliegt und damit eine besonders gute Abdeckwirkung erzielt werden kann.

Vorzugsweise soll der Überlappbereich an dem dem Basisbereich abgewandten Ende des zweiten Schenkels angeordnet sein. Vorzugsweise erstreckt sich der Überlappbereich bis zur Sollknickstelle in Richtung des ersten Schenkels. Nach der Sollknickstelle erstreckt sich der Überlappbereich dann in einem Winkel gegenüber dem zweiten Schenkel, wobei vorzugsweise der Überlappbereich an der Sollknickstelle nicht so stark abgewinkelt ist, wie der Abdeckbereich. Dadurch kann erreicht werden, dass der Abschnitt des Überlappbereichs, der abgewinkelt ist, gegen die Wand gedrückt wird, wenn das Dichtungsprofil an der Wand befestigt ist. Es ist zu beachten, dass der Überlappbereich aus auf der anderen Seite im Vergleich zu dem Abdeckbereich an die Wand gedrückt ist. Daher ist der Überlappbereich nicht derart stark abgewinkelt wie der Abdeckbereich. Alternativ kann der Überlappbereich nach der Sollknickstelle sich weiter in der Richtung des zweiten Schenkels erstrecken, also nicht abgewinkelt sein.

Vorzugsweise ist der Abdeckbereich länger als der erste Schenkel. Der Überlappbereich ist insbesondere kürzer als der zweite Schenkel. Bevorzugt sind der erste Schenkel und der zweite Schenkel gleich lang. Die Sollknickstelle kann beispielsweise als eine Verjüngung in dem Abdeckbereich oder Überlappbereich vorgesehen sein. Die Sollknickstelle kann aber auch durch ein Material erzielt werden, das weicher als der übrige Teil des Abdeckbereichs oder des Überlappbereichs ist. Insbesondere kann der Werkstoff des Abdeckbereichs (oder des Überlappbereichs) und der Sollknickstelle der gleiche sein, wobei durch eine unterschiedliche Herstellung des Werkstoffs Materialien mit unterschiedlicher Härte erzielt werden.

Es ist bevorzugt, dass der Haltebereich aus einem ersten Material hergestellt ist, das eine größere Härte als ein zweites Material hat, aus dem der Kontaktbereich und/oder der Abdeckbereich und/oder dem Überlappbereich hergestellt ist. Vorzugsweise sind der Kontaktbereich, der Überlappbereich und der Abdeckbereich aus dem gleichen zweiten Material hergestellt und wobei weiter vorzugsweise das erste Material und/oder das zweite Material aus einer Werkstoffgruppe ausgewählt sind, die umfasst: vernetzte thermoplastische Elastomere (TPV), insbesondere Polypropylen (PP)/ Ethylen-Propylen-Dien- Kautschuk (EPDM) (kurz PP/EPDM), und/oder Styrol-Blockcopolymere, insbesondere Styrol-Ethenbuten-StyrolCopolymer (SEBS).

Das erste Material ist demnach vorzugsweise härter als das zweite Material, so dass der Haltebereich weniger verformbar ist als der Kontaktbereich oder der Abdeckbereich oder der Überlappbereich. Dies ist insbesondere vorteilhaft, da der Haltebereich sicher an der Wand befestigt sein soll, was sich durch die Verwendung eines härteren Materials erzielen lässt. Die Verwendung eines weicheren Materials für den Kontaktbereich und/oder den Abdeckbereich und/oder den Überlappbereich bietet den Vorteil, dass sich der Kontaktbereich auch unter Einwirkung einer geringeren Kraft verformen lässt und somit sich eine gute Dichtwirkung erzielen lässt. Auch die Herstellung des Abdeckbereichs oder des Überlappbereichs aus einem weicheren Material bietet den Vorteil, dass der Abdeckbereich gut an der Wand anliegt.

Das erste und zweite Material können aus unterschiedlichen Werkstoffen hergestellt sein, die eine unterschiedliche Härte aufweisen. Bevorzugt ist jedoch, dass das erste Material und das zweite Material aus dem gleichen Werkstoff hergestellt sind, jedoch sich die Verarbeitung des Werkstoffs für den Haltebereich auf der einen Seite und den Kontaktbereich und/oder den Abdeckbereich und/oder den Überlappbereich auf der anderen Seite unterscheidet, so dass zwei unterschiedliche Materialien mit jeweils unterschiedlichen Härten vorliegen. Als Beispiel für den Werkstoff wären vernetzte thermoplastische Elastomere (TPV), insbesondere Polypropylen (PP)/ Ethylen-Propylen-Dien- Kautschuk (EPDM) (kurz PP/EPDM), zu nennen. Alternativ können Styrol-Blockcopolymere, insbesondere StyrolEthenbuten-Styrol-Copolymer (SEBS), verwendet werden. Diese Werkstoffe bieten den Vorteil, dass sie in die meisten Farben eingefärbt werden können, wie beispielsweise grau. Das Dichtungsprofil lässt sich also farblich an die gegebenen Erfordernisse und/oder Wünsche anpassen. Ferner können der Haltebereich, der Kontaktbereich, der Abdeckbereich und/oder der Überlappbereich in der gleichen Farbe hergestellt werden.

Alternativ kann auch Ethylen-Propylen-Dien-Kautschuk oder auch Ethylen-Propylen-Dien-Monomer genannt (EPDM) als der Werkstoff verwendet werden.

Es ist bevorzugt, dass das erste Material des Haltebereichs einen Härtegrad nach Shore A zwischen 80 und 100, insbesondere 90, hat, wobei vorzugsweise das zweite Material einen Härtegrad nach Shore A zwischen 20 und 70, insbesondere zwischen 50 und 70, hat.

Zur Bestimmung des Härtegrad nach Shore A werden die in der Definition des Härtegrads nach Shore A verwendeten Testroutinen verwendet. Diese sind dem Fachmann bekannt und müssen daher nicht weiter erläutert werden. Der Haltebereich hat vorzugsweise demnach einen Härtegrad nach Shore A zwischen 80 und 100, wohingegen der Abdeckbereich und/oder der Kontaktbereich bevorzugt einen Härtegrad nach Shore A zwischen 20 und 70 hat.

Es ist bevorzugt, dass der Haltebereich, insbesondere das Dichtungsprofil, durch Extrusion herstellbar ist, wobei vorzugsweise der erste Schenkel und/oder der zweite Schenkel und/oder der Basisbereich frei von einem Verstärkungsträger sind.

Bevorzugt ist demnach, dass zumindest der Haltebereich oder der Haltebereich, der Kontaktbereich und der Abdeckbereich, also das gesamte Dichtungsprofil, durch Extrusion herstellbar sind. Insbesondere soll das Dichtungsprofil durch TriExtrusion oder Co-Extrusion herstellbar sein, wobei die drei Materialien vorzugsweise das erste Material das Material des Haltebereichs, das zweite Material das Material des Kontaktbereichs, des Überlappbereichs und des Abdeckbereichs sowie das dritte Material das Material der Beschichtung ist. Alternativ können drei unterschiedliche Materialien für den Haltebereich den Abdeckbereich (sowie Überlappbereich) und den Kontaktbereich verwendet werden, die ebenfalls durch Tri-Extrusion herstellbar sind. Die Beschichtung wird in diesem Fall bei einem separaten, nachfolgenden Schritt aufgebracht.

Vorzugsweise weisen der erste Schenkel, der zweite Schenkel und/oder der Basisbereich keine Verstärkungsträger auf, so dass die Haltewirkung des Haltebereichs allein durch die Form und die Härte des für den Haltebereich verwendeten Materials erzielt wird. Ein Verstärkungsträger ist beispielsweise eine Armierung oder eine sonstige Einlage. Durch den Verzicht auf den Verstärkungsträger kann der Haltebereich besonders einfach hergestellt werden.

Die Erfindung stellt ferner eine Türanordnung, insbesondere für ein Reisemobil oder einen Wohnwagen, bereit, die eine Wand, eine Tür, die relativ zu der Wand zwischen einer Öffnungsstellung und einer Schließstellung schwenkbar ist, und ein Dichtungsprofil, so wie es oben beschrieben wurde, und das an der Wand befestigt ist, umfasst. In der Schließstellung der Tür ergibt sich zwischen der Wand und der Tür ein Spalt, der von dem Kontaktbereich des Dichtungsprofils zumindest bereichsweise abgedichtet ist.

Im Hinblick auf die Türanordnung gelten die im Zusammenhang mit dem Dichtungsprofil gemachten oben genannten Überlegungen. Die Wand kann eine Wand des Reisemobils oder des Wohnwagens im Bereich des Wohnraums sein. Unter der Tür kann eine Tür für Personen, aber auch eine Tür für einen Lagerraum oder ähnlichem verstanden werden. Der Spalt, der sich zwischen der Tür und der Wand ergibt, ist ähnlich dem, wie er bei herkömmlichen Türen in Gebäuden auftritt. Er dient zur Vermeidung von reibungserzeugenden Kontaktstellen zwischen der Wand und der Tür. Dieser Spalt soll durch das Dichtungsprofil thermisch als auch gegenüber Flüssigkeiten abgedichtet werden.

Es ist bevorzugt, dass die Wand eine Zarge aufweist, an welcher der Haltebereich des Dichtungsprofils befestigt ist, wobei vorzugsweise die Zarge wenigstens eine Ausnehmung aufweist, in welche die Rippe des Haltebereichs eingreift.

Die Zarge kann beispielsweise auf eine Stirnfläche der Wand aufgesetzt werden. Beispielsweise befindet sich an der Zarge auch ein Scharnier für die Tür. Vorzugsweise wird das Dichtungsprofil mit Hilfe des Haltebereichs an der Zarge befestigt, wobei die Ausnehmung an der Zarge mit der Rippe des Haltebereichs in Eingriff steht. Insbesondere wird eine formschlüssige Befestigung erzielt.

Es ist bevorzugt, dass die Zarge extrudierbar ist, wobei vorzugsweise die Zarge aus Aluminium herstellbar ist und wobei weiter vorzugsweise die Zarge wenigstens abschnittsweise gekrümmt ist. Dies hat den Vorteil, dass die Zarge kostengünstig herstellbar ist und leicht ist, wenn sie aus Aluminium hergestellt ist.

Eine abschnittsweise Krümmung kann beispielsweise dadurch realisiert werden, dass eine Ecke einer Zarge, das heißt dort, wo sich zwei Zargenholme treffen, durch eine Krümmung realisiert ist. Dies hat den Vorteil, dass in der Ecke keine Stöße von zwei Dichtungsprofilen entstehen, die das Risiko einer verminderten Dichtwirkung erhöhen. Durch die Krümmung der Zarge ist auch das Dichtungsprofil gekrümmt. Aufgrund der bevorzugten Ausgestaltung der des Haltebereichs ohne Verstärkungsträger passt sich das Dichtungsprofil an die Krümmung der Zarge an, ohne dass der Verstärkungsträger in einem separaten Schritt gekrümmt werden müsste.

Ein weiteres Beispiel einer abschnittsweisen Krümmung der Zarge ist eine Ausgestaltung der Zarge, bei der ein gerader Abschnitt gebogen, also gekrümmt, ausgebildet ist. Beispielsweise verjüngt sich eine Tür nach oben hin, so dass auch die seitlichen Zargenholme gekrümmt sind.

Es ist bevorzugt, dass die Zarge einen Befestigungsvorsprung aufweist, an dem die Ausnehmung vorgesehen ist, wobei vorzugsweise der Befestigungsvorsprung eine Mehrzahl von Ausnehmungen aufweist, in die eine Mehrzahl von Rippen formschlüssig eingreift.

Der Befestigungsvorsprung kann insbesondere eine Leiste sein, auf die der Haltebereich aufgesteckt werden kann. Der Befestigungsvorsprung weist vorzugsweise in die Richtung, in die sich die Tür öffnet. Das heißt, der Befestigungsvorsprung ist quer zur Längsausdehnung der Wand angeordnet. Durch das Vorsehen von mehreren Ausnehmungen an dem Befestigungsvorsprung wird ein besonders guter Formschluss zwischen Befestigungsvorsprung und Haltebereich erzielt.

In einem weiteren Aspekt der Erfindung wird ein Reisemobil oder ein Wohnwagen bereitgestellt, das oder der eine Türanordnung oder Dichtungsprofil aufweist, so wie sie oben beschrieben worden sind.

Ein Ausführungsbeispiel der Erfindung wird anhand von Zeichnungen erklärt. Darin zeigen:
- Fig. 1: eine Perspektivansicht eines Reisemobils mit einer Tür mit runden Ecken;
- Fig. 2: eine Perspektivansicht eines Reisemobils mit runder Tür;
- Fig. 3: einen Querschnitt durch eine schematisch dargestellte Türanordnung entlang der Linie II-II in Fig. 2;
- Fig. 4: ein Dichtungsprofil im unbelasteten Zustand;
- Fig. 5: das Dichtungsprofil von Fig.4 im belasteten Zustand; und
- Fig. 6: einen Querschnitt durch eine schematisch dargestellte Türanordnung entlang der Linie II-II in Fig. 2 gemäß einer zweiten Ausführungsform.

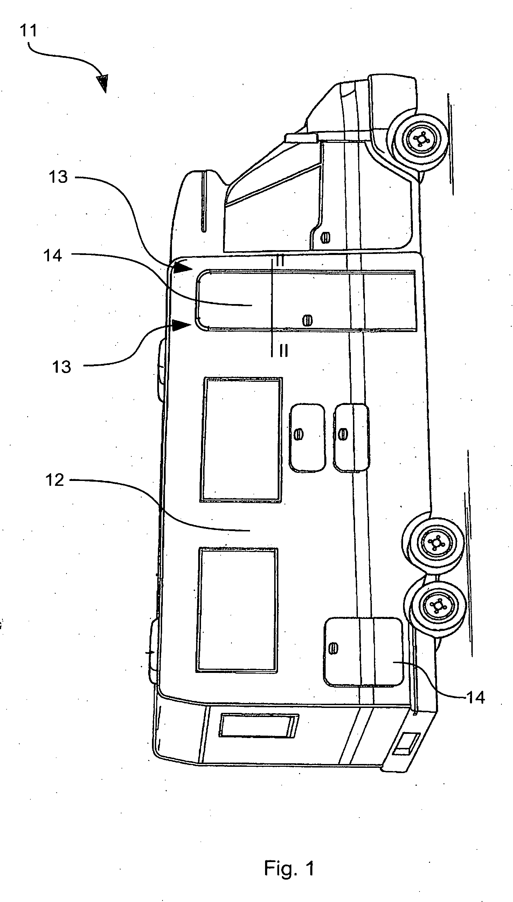

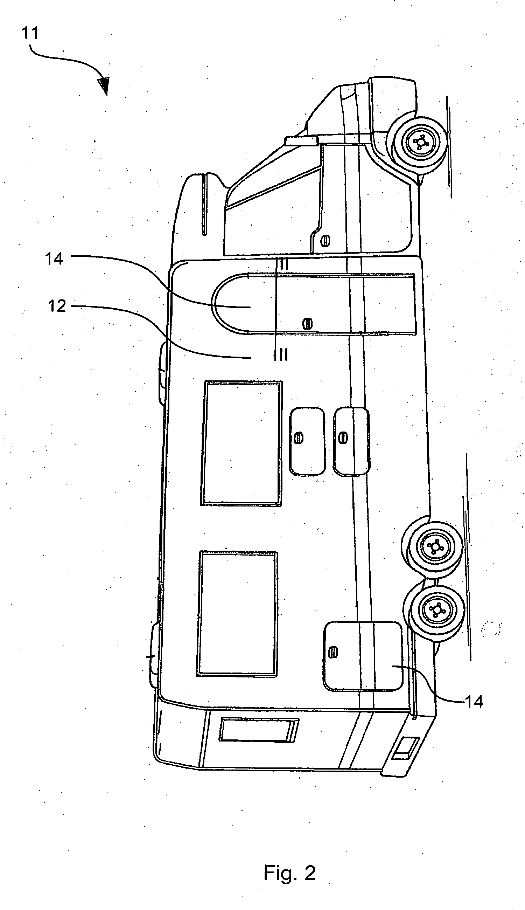

Ein Reisemobil 11 hat eine Wand 12 sowie zwei Türen 14. Die Türen 14 können eine Tür sein, durch die Personen das Reisemobil 11 betreten können, oder eine Tür, die ein Lagerfach verschließt. Bei jeder Tür 14 ist eine Türanordnung 10 vorgesehen. Die Tür 14, die in Fig. 1 gezeigt ist, weist zwei obere Ecken 13 auf, die abgerundet sind. Daher weist eine Zarge 20 der Tür 14 auch zwei abgerundete Ecken 13 auf. Die in Fig. 2 dargestellte Tür 14 weist keine oberen Ecken 13 auf. Hier ist die Tür 14 mit einer Krümmung versehen. Somit ist auch die Zarge 20 gekrümmt:

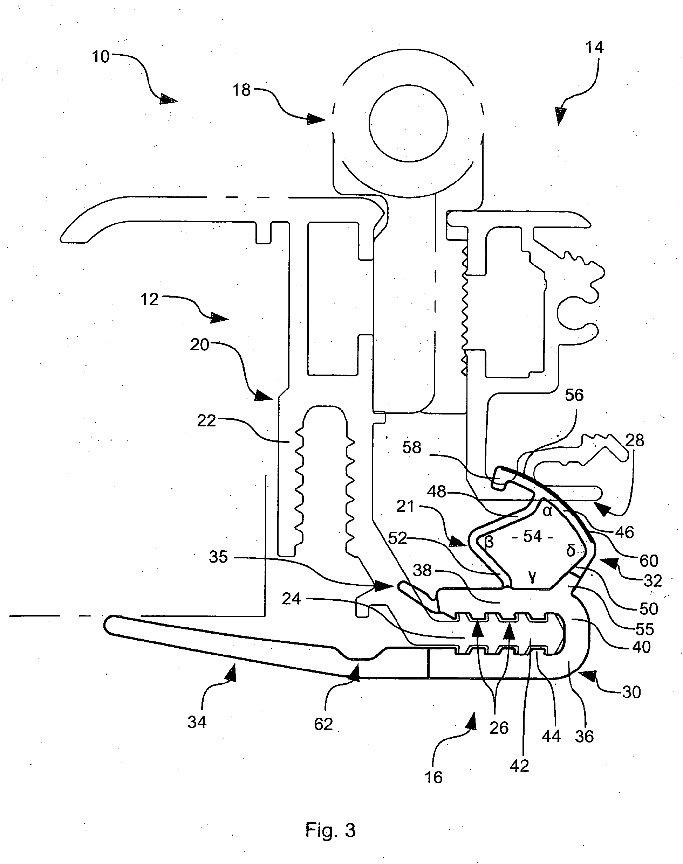

Die Türanordnung 10 weist eine Wand 12, eine Tür 14 und ein Dichtungsprofil 16 auf. Die Tür 14 ist mittels eines Scharniers 18 gegenüber der Wand 12 schwenkbar. Es sei an dieser Stelle nochmals darauf hingewiesen, dass Fig. 3 keine isometrische Darstellung der Türanordnung 10 ist, so dass einzelne Teile vergrößert oder verkleinert dargestellt sind.

Die Wand 12 weist eine Zarge 20 auf. Die Zarge 20 ist aus Aluminium hergestellt und wird durch Extrusion gefertigt. Zwischen Wand 12 und der Tür 14 in der Schließstellung befindet sich ein Spalt 21. Die Zarge 20 hat einen Befestigungsbereich 22, mittels welchem die Zarge 20 an der Wand 12 befestigt werden kann, und einen Befestigungsvorsprung 24.

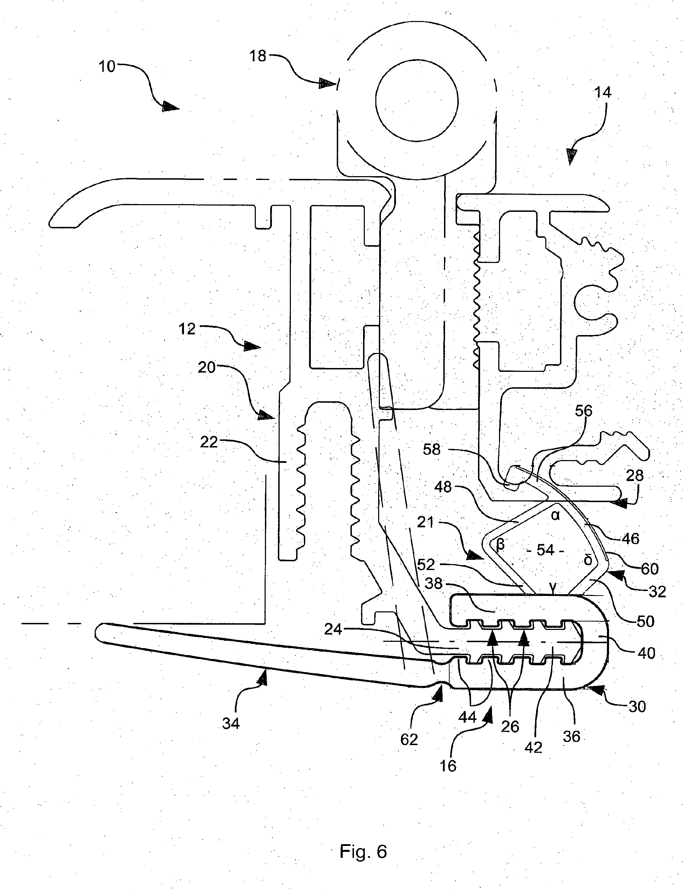

Der Befestigungsvorsprung 24 ist senkrecht zu einer Längsausdehnung der Wand 12 ausgerichtet. Der Befestigungsvorsprung 24 weist Ausnehmungen 26 auf, so dass der Befestigungsvorsprung 24 eine geriffelte Außenfläche oder, wie in Figs. 3 und 6 gezeigt, zwei geriffelte Außenflächen aufweist. Die Tür 14 weist einen Anschlagbereich 28 auf, der in der Schließstellung der Tür 14, die in Fig. 3 gezeigt ist, das Dichtungsprofil 16 berührt.

Das Dichtungsprofil 16 weist einen Haltebereich 30, einen Kontaktbereich 32, einen Abdeckbereich 34 und einen Überlappbereich 35 auf. Der Haltebereich 30 ist im Querschnitt U-förmig und hat einen ersten Schenkel 36, einen zweiten Schenkel 38 und einen Basisbereich 40. Der erste Schenkel 36 ist zu dem zweiten Schenkel 38 benachbart und mit diesem über den Basisbereich 40 verbunden. Zwischen dem ersten Schenkel 36 und dem zweiten Schenkel 38 ist ein Zwischenraum 42 vorgesehen. In diesem Zwischenraum 42 befindet sich der Befestigungsvorsprung 24.

Der erste Schenkel 36 und der zweite Schenkel 38 weisen an ihren dem Zwischenraum zugewandten Innehflächen wenigstens eine Rippe 44 auf, wobei in Figs. 3 und 6 vier Rippen für den ersten Schenkel 36 und den zweiten Schenkel 38 gezeigt sind. Die Rippen 44 stehen mit den Ausnehmungen 26 des Befestigungsvorsprungs 24 in Eingriff, so dass der Haltebereich 30 formschlüssig an dem Befestigungsvorsprung 24 befestigt ist. Der Haltebereich 30 weist keinen Verstärkungsträger auf.

An dem zweiten Schenkel 38 ist der Kontaktbereich 32 befestigt, beispielsweise durch Co-Extrusion. Der Kontaktbereich 32 weist eine erste Seitenfläche 46, eine zweite Seitenfläche 48, eine dritte Seitenfläche 50 und eine vierte Seitenfläche 52 auf, die einen Hohlraum 54 einschließen. Die erste Seitenfläche 46 und die zweite Seitenfläche 48 sind auf einer ersten Seite des Kontaktbereichs 32 angeordnet, wohingegen die dritte Seitenfläche 50 und die vierte Seitenfläche 52 auf einer zweiten Seite des Kontaktbereichs 32 angeordnet sind. Die erste Seite ist dem Haltebereich 30 abgewandt, während die zweite Seite dem Haltebereich 30 zugewandt ist.

Die benachbarten Seitenflächen 46 bis 52 schließen jeweils die Winkel α, β, γ, δ ein. Die Winkel α, β, γ, δ sind ≠ 0° und insbesondere in einem Bereich von 60 und 120°, so dass der Kontaktbereich 32 im Querschnitt im Wesentlichen rechteckförmig ist.

Die dritte Seitenfläche 50 weist ein Teil des Haltebereichs 30 auf, der durch einen Ansatz 55 gebildet wird. Der Ansatz 55 steht in Richtung der ersten Seitenfläche 50 vor und ist aus dem gleichen Material wie der Haltebereich 30 gebildet.

An der ersten Seitenfläche 46 ist ein Vorsprung 56 vorgesehen, der sich in Verlängerung der ersten Seitenfläche 46 erstreckt. An dem Vorsprung 56 ist ein Anschlag 58 vorgesehen, der in Richtung des Haltebereichs 30 von dem Vorsprung 56 vorsteht.

An der ersten Seitenfläche 46 und an dem Vorsprung 56 ist eine Beschichtung 60 vorgesehen. Die Beschichtung 60 ist in einer Aussparung der ersten Seitenfläche 46 und des Vorsprungs 56 vorgesehen. Die Dicke der Beschichtung 60 und die Tiefe der Aussparung sind derart gestaltet, dass die Beschichtung 60 flächenbündig mit dem Rest der ersten Seitenfläche 46 und des Vorsprungs 56 ist.

In Figs. 3 und 6ist der Kontaktbereich 32 in einem nichtkomprimierten Zustand gezeigt, obwohl sich die Tür 14 in der Schließstellung befindet. Dies dient zur Verdeutlichung des Kontaktbereichs 32 in einem unbelasteten Zustand. Wäre der Kontaktbereich 32 derart geformt, wie es der Fall wäre, wenn die Tür 14 sich in der Schließstellung befindet, würde der Kontaktbereich 32 komprimiert sein. Die Verformung oder Komprimierung des Kontaktbereichs 32 würde sich wie folgt bevorzugt darstellen.

Der Kontaktbereich 32 würde an den Schnittpunkten der ersten Seitenfläche 46 und der dritten Seitenfläche 50 sowie an dem Schnittpunkt der zweiten Seitenfläche 48 und der vierten Seitenfläche 52 knicken, so dass die Winkel β und δ verkleinert werden. Gleichzeitig würde es am Schnittpunkt der ersten Seitenfläche 46 und der zweiten Seitenfläche 48 sowie am Schnittpunkt, der sich hier gedanklich im Haltebereich 30 befindet, der dritten Seitenfläche 50 und der vierten Seitenfläche 52 dehnen, so dass sich die Winkel α und γ vergrößern.

Im unbelasteten Zustand schließt die erste Seitenfläche 46 mit dem Anschlagsbereich 28 der Tür 14 einen Winkel ein. Durch das Schließen der Tür 14 wird der Kontaktbereich 32 derart verformt, dass die erste Seitenfläche 46 mit dem Vorsprung 56 parallel zu dem Anschlagbereich 28 ist, so dass sich eine große Anlagefläche zwischen der Tür 14 und dem Kontaktbereich 32 ergibt. Aufgrund der Beschichtung 60 wird die Reibung oder das Anhaften der ersten Seitenfläche 46 und des Vorsprungs 56 am Anschlagbereich 28 der Tür 14 verringert, so dass sich der Kontaktbereich 32 nicht derart ungünstig verformt, dass die erste Seitenfläche 46 und der Vorsprung 56 nicht, wie gewünscht, an dem Anschlagbereich 28 anliegt.

Der Anschlag 58 liegt im komprimierten Zustand des Kontaktbereichs 32 an der zweiten Seitenfläche 48 an. Dadurch kann erreicht werden, dass auch das freie Ende des Vorsprungs 56 fest an dem Anschlagbereich 28 anliegt. Dadurch kann sichergestellt werden, dass sowohl die erste Seitenfläche 46 als auch der Vorsprung 56 über deren ganze Länge fest an dem Anschlagbereich 28 anliegt.

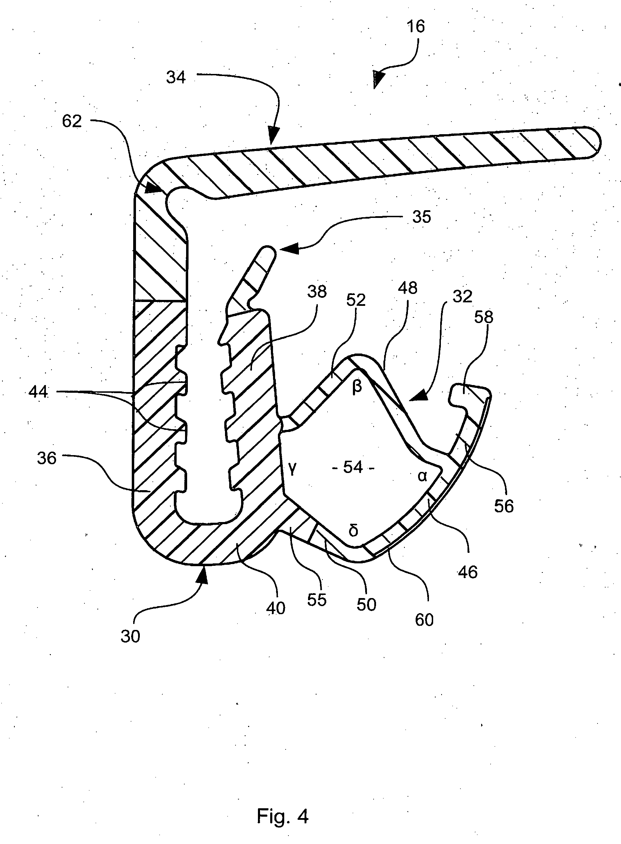

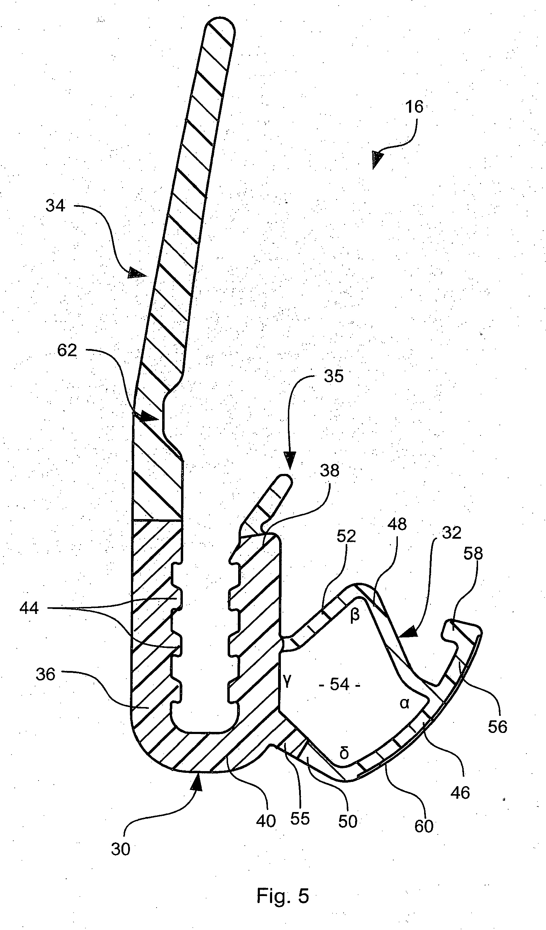

Der Abdeckbereich 34 ist an einem zweiten Ende des ersten Schenkels 36 des Haltebereichs 30 vorgesehen. Das zweite Ende ist dem Basisbereich 40 abgewandt angeordnet. Der Abdeckbereich 34 weist eine Sollknickstelle 62 in Form einer Verjüngung auf. Im unbelasteten Zustand ist der Abdeckbereich 34 nach der Sollknickstelle 62 gegenüber dem ersten Schenkel 36 gewinkelt, wie dies in Fig. 3 gestrichelt oder in Fig. 4 dargestellt ist. Wird das Dichtungsprofil 16 auf dem Befestigungsvorsprung 24 aufgebracht, so wird der Abdeckbereich 34 aus seiner unbelasteten Position gedrückt, wobei sich der Abdeckbereich 34 um die Sollknickstelle 62 biegt, wiediesunteranderem in Fig. 5 dargestellt ist. Dadurch kann erreicht werden, dass der Abdeckbereich 34 fest an der Wand 12 anliegt.

Der Überlappbereich 35 ist an einem zweiten Ende des zweiten Schenkels 38 des Haltebereichs 30 vorgesehen. Das zweite Ende ist dem Basisbereich 40 abgewandt angeordnet. Der Überlappbereich 35 weist eine Sollknickstelle 62 in Form einer Verjüngung auf. Im unbelasteten Zustand ist der Abdeckbereich 34 nach der Sollknickstelle 62 gegenüber dem ersten Schenkel 36 gewinkelt, wie dies in Fig. 4 dargestellt ist. Wird das Dichtungsprofil 16 auf dem Befestigungsvorsprung 24 aufgebracht, so wird der Überlappbereich 35 aus seiner unbelasteten Position gedrückt, wobei sich der Abdeckbereich 34 um die Sollknickstelle 62 biegt, wie dies unter anderem in Fig. 5 dargestellt ist. Die Auslenkung des Überlappbereichs 35 geschieht in die entgegen gesetzte Richtung wie die Richtung des Abdeckbereichs 34.

Die zweite Ausführungsform des Dichtungsprofils 16, die in Fig. 6 dargestellt ist, ist zu der in den Figs. 3 bis 5 dargestellten Ausführungsform identisch außer den im Folgenden genannten Unterschieden. Die zweite Ausführung weist keinen

Überlappbereich 35 auf. Ferner fehlt der Ansatz 55. Der Kontaktbereich 32 im Bereich der dritten Seitenfläche 50 ist direkt an dem zweiten Schenkel 38 des Haltebereichs 30 befestigt.

**Bezugszeichenliste**

| | | | |
|---|---|---|---|
| 10 | Türanordnung | 62 | Sollknickstelle |
| 11 | Reisemobil | | |
| 12 | Wand | | |
| 13 | Ecke | | |
| 14 | Tür | | |
| 16 | Dichtungsprofil | | |
| 18 | Scharnier | | |
| 20 | Zarge | | |
| 21 | Spalt | | |
| 22 | Befestigungsbereich | | |
| 24 | Befestigungsvorsprung | | |
| 26 | Ausnehmung | | |
| 28 | Anschlagbereich | | |
| 30 | Haltebereich | | |
| 32 | Kontaktbereich | | |
| 34 | Abdeckbereich | | |
| 35 | Überlappbereich | | |
| 36 | Erster Schenkel | | |
| 38 | Zweiter Schenkel | | |
| 40 | Basisbereich | | |
| 42 | Zwischenraum | | |
| 44 | Rippe | | |
| 46 | Erste Seitenfläche | | |
| 48 | Zweite Seitenfläche | | |
| 50 | Dritte Seitenfläche | | |
| 52 | Vierte Seitenfläche | | |
| 54 | Hohlraum | | |
| 55 | Ansatz | | |
| 56 | Vorsprung | | |
| 58 | Anschlag | | |
| 60 | Beschichtung | | |

## Patentansprüche

1. Dichtungsprofil zum Abdichten eines Spalts (21) zwischen einer Wand (12) und einer Tür (14), insbesondere für ein Reisemobil (11) oder einen Wohnwagen, umfassend
einen Haltebereich (30), mittels welchem das Dichtungsprofil (16) an der Wand (12) befestigbar ist, und
einen Kontaktbereich (32), der verformbar ist und der zur Anordnung in dem Spalt (21) vorgesehen ist,
wobei der Kontaktbereich (32) eine erste Seite, die dem Haltebereich (30) abgewandt ist, und eine zweite Seite, die dem Haltebereich (30) zugewandt ist und mit diesem verbunden ist, aufweist,
wobei der Kontaktbereich (32) auf der ersten Seite zumindest abschnittsweise mit einer Beschichtung (60) versehen ist, die reibungs- und/oder haftvermindernd ist, und
wobei der Kontaktbereich (32) auf der ersten Seite eine erste Seitenfläche (46) und eine zweite (48) Seitenfläche sowie auf der zweiten Seite eine dritte Seitenfläche (50) und eine vierte Seitenfläche (52) aufweist,
wobei der Kontaktbereich (32) einen Vorsprung (56) aufweist, der in Verlängerung der ersten Seitenfläche angeordnet ist,
**dadurch gekennzeichnet, dass** an dem Vorsprung (56) ein Anschlag (58) vorgesehen ist, der in Richtung des Halfebereichs (30) von dem Vorsprung (56) vorsteht.

2. Dichtungsprofil nach Anspruch 1, **dadurch gekennzeichnet, dass** der Kontaktbereich (32) einen Hohlraum (54) aufweist.

3. Dichtungsprofil nach Anspruch 1 oder 2, **dadurch gekennzeichnet, dass** die Seitenflächen (46, 48, 50, 52) im Querschnitt im Wesentlichen rechteckförmig, insbesondere rautenförmig, angeordnet sind.

4. Dichtungsprofil nach einem der Ansprüche 1 bis 3, **dadurch gekennzeichnet**, **dass** die Beschichtung (60) an der ersten Seitenfläche (46) angebracht ist.

5. Dichtungsprofil nach einem der Ansprüche 1 bis 4, **dadurch gekennzeichnet, dass** der Vorsprung (56) mit der Beschichtung (60) versehen ist und wobei insbesondere die Beschichtung (60) ein Film aus Polyethylen (PE-Film) ist.

6. Dichtungsprofil nach einem der Ansprüche 1 bis 5, **dadurch gekennzeichnet**, **dass** der Haltebereich (30) im Querschnitt im Wesentlichen U-förmig ist, wobei vorzugsweise der Haltebereich (30) einen ersten Schenkel (36), einen zweiten Schenkel (38), der von dem ersten Schenkel (36) durch einen Zwischenraum (42) beabstandet ist, und einen an einem ersten Ende den ersten Schenkel (36) und den zweiten Schenkel (38) verbindenden Basisbereich (40) aufweist und wobei weiter vorzugsweise an einer dem Zwischenraum (42) zugewandten Innenfläche des ersten Schenkels (36) und/oder des zweiten Schenkels (38) wenigstens eine Rippe (44) angeordnet ist.

7. Dichtungsprofil nach einem der Ansprüche 1 bis 6, gekennzeichnet durch einen Abdeckbereich (34) und/oder einen Überlappbereich (35), wobei der Abdeckbereich (34) vorzugsweise an einem zweiten Ende des ersten Schenkels (36) angeordnet ist, wobei weiter vorzugsweise der Überlappbereich (35) an einem zweiten Ende des zweiten Schenkels (38) angeordnet ist und wobei insbesondere der Abdeckbereich (34) und/oder der Überlappbereich eine Sollknickstelle (62) aufweisen.

8. Dichtungsprofil nach einem der Ansprüche 1 bis 7, **dadurch gekennzeichnet**, **dass** der Haltebereich (30) aus einem ersten Material hergestellt ist, das eine größere Härte als ein zweites Material hat, aus dem der Kontaktbereich (32) und/oder der Abdeckbereich (34) und/oder der Überlappbereich (35) hergestellt ist, wobei vorzugsweise der Kontaktbereich (32), der Überlappbereich (35) und der Abdeckbereich (34) aus dem gleichen zweiten Material hergestellt sind.

9. Dichtungsprofil nach Anspruch 8, **dadurch gekennzeichnet, dass** das erste Material einen Härtegrad nach Shore A zwischen 80 und 100, insbesondere 90, hat, wobei vorzugsweise das zweite Material einen Härtegrad nach Shore A zwischen 20 und 70, insbesondere zwischen 50 und 70, hat und wobei weiter vorzugsweise das erste Material und/oder das zweite Material aus einer Werkstoffgruppe ausgewählt sind, die umfasst: vernetzte thermoplastische Elastomere (TPV), insbesondere Polypropylen/Ethylen-Propylen-Dien-Kautschuk (PP/EPDM), und/oder Styrol-Blockcopolymere, insbesondere Styrol-Ethenbuten-StyrolCopolymer (SEBS).

10. Dichtungsprofil nach einem der Ansprüche 1 bis 9, **dadurch gekennzeichnet**, **dass** zumindest der Haltebereich (30), insbesondere das Dichtungsprofil (16), durch Extrusion herstellbar ist, wobei vorzugsweise der erste Schenkel (36) und/oder der zweite Schenkel (38) und/oder der Basisbereich (40) frei von einem Verstärkungsträger ist.

11. Türanordnung, insbesondere für ein Reisemobil (11) oder einen Wohnwagen, umfassend
eine Wand (12),
eine Tür (14), die relativ zu der Wand (12) zwischen einer Öffnungsstellung und einer Schließstellung schwenkbar ist, und
ein Dichtungsprofil (16) nach einem der Ansprüche 1 bis 10, das an der Wand (12) befestigt ist,
wobei sich ein in der Schließstellung zwischen der Wand (12) und der Tür (14) ergebender Spalt (21) von dem Kontaktbereich (32) des Dichtungsprofils (16) zumindest bereichsweise abgedichtet ist.

12. Türanordnung nach Anspruch 11, **dadurch gekennzeichnet, dass** die Wand (12) eine Zarge (20) aufweist, an welcher der Haltebereich (30) des Dichtungsprofils (16) befestigt ist, wobei vorzugsweise die Zarge (20) wenigstens eine Ausnehmung (26) aufweist, in welche die Rippe (44) des Haltebereichs (30) eingreift.

13. Türanordnung nach Anspruch 12, **dadurch gekennzeichnet, dass** die Zarge (20) extrudierbar ist, wobei vorzugsweise die Zarge (20) aus Aluminium herstellbar ist und wobei weiter vorzugsweise die Zarge (20) wenigstens abschnittsweise gekrümmt ist.

14. Türanordnung nach Anspruch 12 oder 13, **dadurch gekennzeichnet, dass** die Zarge (20) einen Befestigungsvorsprung (24) aufweist, an dem die Ausnehmung (26) vorgesehen ist, wobei vorzugsweise der Befestigungsvorsprung (24) eine Mehrzahl von Ausnehmungen (26) aufweist, in die eine Mehrzahl von Rippen (44) formschlüssig eingreifen.

## Claims

1. A sealing profile for sealing a gap (21) between a wall (12) and a door (14), particularly for a motorhome (11) or a caravan,
comprising
a clamping region (30) by means of which the sealing profile (16) can be attached to the wall (12), and
a deformable contact region (32) provided for disposing in the gap (21),
the contact region (32) comprising a first side facing away from the clamping region (30) and a second side facing toward the clamping region (30) and connected thereto,
the contact region (32) having a low-friction and/or anti-stick coating (60) at least in segments on the first side, and
the contact region (32) comprising a first side surface (46) and a second (48) side surface on the first side, and a third side surface (50) and a fourth side surface (52) on the second side,
the contact region (32) comprising a protrusion (56) disposed as an extension of the first side surface,
**characterized in that** a stop (58) protruding from the protrusion (56) in the direction of the clamping region (30) is provided on the protrusion (56).

2. The sealing profile according to claim 1, **characterized in that** the contact region (32) comprises a hollow space (54).

3. The sealing profile according to claim 1 or 2, **characterized in that** the side surfaces (46, 48, 50, 52) are disposed having a cross section substantially in the shape of a rectangle, particularly in the shape of a diamond.

4. The sealing profile according to any one of the claims 1 to 3, **characterized in that** the coating (60) is applied on the first side surface (46).

5. The sealing profile according to any one of the claims 1 to 4, **characterized in that** the protrusion (56) is provided with the coating (60) and wherein the coating (60) is particularly a film made of polyethylene (PE film).

6. The sealing profile according to any one of the claims 1 to 5, **characterized in that** the clamping region (30) is substantially U-shaped in cross section, wherein the clamping region (30) preferably comprises a first leg (36), a second leg (38) spaced apart from the first leg (36) by a clear space (42), and a base region (40) connecting the first leg (36) and the second leg (38) at a first end, and wherein further preferably at least one rib (44) is disposed on an inner surface of the first leg (36) and/or of the second leg (38) facing toward the clear space (42).

7. The sealing profile according to any one of the claims 1 to 6, **characterized by** a cover region (34) and/or an overlapping region (35), wherein the cover region (34) is preferably disposed at a second end of the first leg (36), wherein the overlapping region (35) is further preferably disposed at a second end of the second leg (38), and wherein the cover region (34) and/or the overlapping region particularly comprise an intended bending point (62).

8. The sealing profile according to any one of the claims 1 to 7, **characterized in that** the clamping region (30) is made from a first material having a greater hardness than a second material of which the contact region (32) and/or the cover region (34) and/or the overlapping region (35) is made, wherein the contact region (32), the overlapping region (35) and the cover region (34) are preferably made of the same second material.

9. The sealing profile according to claim 8, **characterized in that** the first material has a Shore A hardness level between 80 and 100, particularly 90, wherein the second material preferably has a Shore A hardness level between 20 and 70, particularly between 50 and 70, and wherein the first material and/or the second material are further preferably selected from a group of materials comprising:
cross-linked thermoplastic elastomers (TPV), particularly
polypropylene/ethylene-propylene-diene rubber (PP/EPDM), and/or styrol block copolymers, particularly styrol-ethene-butene-styrol-copolymer (SEBS).

10. The sealing profile according to any one of the claims 1 to 9, **characterized in that** at least the clamping region (30), particularly the sealing profile (16), can be manufactured by extrusion, where the first leg (36) and/or the second leg (38) and/or the base region (40) is preferably free of a reinforcement.

11. A door arrangement, particularly for a motorhome (11) or a caravan, comprising
a wall (12),
a door (14) pivotable relative to the wall (12) between an open position and a closed position, and
a sealing profile (16) according to any one of the claims 1 through 10 that can be mounted on the wall (12),
wherein a gap (21) arising between the wall (12) and the door (14) in the closed position is sealed at least in segments by the contact region (32) of the sealing profile (16).

12. The door arrangement according to claim 11, **characterized in that** the wall (12) comprises a frame (20) to which the clamping region (30) of the sealing profile (16) is attached, wherein the frame (20) preferably comprises at least one recess (26) in which the rib (44) of the clamping region (30) engages.

13. The door arrangement according to claim 12, **characterized in that** the frame (20) can be extruded, wherein the frame (20) can preferably be made of aluminum, and wherein the frame (20) is further preferably curved at least in segments.

14. The door arrangement according to claim 12 or 13, **characterized in that** the frame (20) comprises an attachment protrusion (24) on which the recess (26) is provided, wherein the attachment protrusion (24) preferably comprises a plurality of recesses (26) into which a plurality of ribs (44) engage in a form-fit manner.

## Revendications

1. Profil d'étanchéité pour étancher un intervalle (21) entre une paroi (12) et une porte (14), en particulier pour un camping-car (11) ou une caravane, comprenant
une zone de maintien (30) au moyen de laquelle le profil étanchéité (16) est susceptible d'être fixé sur la paroi (12), et une zone de contact (32) qui est déformable et qui est prévue pour être agencée dans l'intervalle (21),
dans lequel la zone de contact (32) comporte un premier côté qui est détourné de la zone de maintien (30), et un second côté qui est tourné vers la zone de maintien (30) et qui est relié à celle-ci,
dans lequel la zone de contact (32) est pourvue, sur le premier côté, au moins par portions, d'un revêtement (60) qui réduit la friction et/ou l'adhérence, et
dans lequel la zone de contact (32) comporte une première surface latérale (46) et une seconde surface latérale (48) sur le premier côté, ainsi qu'une troisième surface latérale (50) et une quatrième surface latérale (52) sur le second côté,
dans lequel la zone de contact (32) comporte une saillie (56) qui est agencée dans le prolongement de la première surface latérale,
**caractérisé en ce qu'**il est prévu sur la saillie (56) une butée (58) qui dépasse de la saillie (56) en direction de la zone de maintien (30).

2. Profil d'étanchéité selon la revendication 1, **caractérisé en ce que** la zone de contact (32) comporte une cavité (54).

3. Profil d'étanchéité selon la revendication 1 ou 2, **caractérisé en ce que** les surfaces latérales (46, 48, 50, 52) sont agencées en section transversale sensiblement sous forme rectangulaire, en particulier sous forme de losange.

4. Profil d'étanchéité selon l'une des revendications 1 à 3, **caractérisé en ce que** le revêtement (60) est appliqué sur la première surface latérale (46).

5. Profil d'étanchéité selon l'une des revendications 1 à 4, **caractérisé en ce que** la saillie (56) est pourvue du revêtement (60), et dans lequel le revêtement (60) est en particulier un film en polyéthylène (film PE).

6. Profil d'étanchéité selon l'une des revendications 1 à 5, **caractérisé en ce que** la zone de maintien (30) présente en section transversale sensiblement une forme en U, dans lequel la zone de maintien (30) comprend de préférence une première branche (36), une seconde branche (38), qui est écartée de la première branche (36) par un intervalle (42), et une zone de base (40) qui relie à une première extrémité la première branche (36) et la seconde branche (38), et dans lequel il est en outre de préférence prévu au moins une nervure (44) agencée sur une surface intérieure, tournée vers l'intervalle (42), de la première branche (36) et/ou de la seconde branche (38).

7. Profil d'étanchéité selon l'une des revendications 1 à 6, **caractérisé par** une zone de recouvrement (34) et/ou par une zone de chevauchement (35), dans lequel la zone de recouvrement (34) est de préférence agencée à une seconde extrémité de la première branche (36), et dans lequel la zone de chevauchement (35) est en outre de préférence agencée à une seconde extrémité de la seconde branche (38), et dans lequel la zone de recouvrement (34) et/ou la zone de chevauchement présente en particulier un emplacement de pliage de consigne (62).

8. Profil d'étanchéité selon l'une des revendications 1 à 7, **caractérisé en ce que** la zone de maintien (30) est fabriquée en un premier matériau qui présente une dureté plus élevée qu'un second matériau duquel est fabriqué la zone de contact (32) et/ou la zone de recouvrement (34) et/ou la zone de chevauchement (35), dans lequel la zone de contact (32), la zone de chevauchement (35) et la zone de recouvrement (34) sont en outre de préférence fabriquées du même second matériau.

9. Profil d'étanchéité selon la revendication 8, **caractérisé en ce que** le premier matériau a une dureté Shore A entre 80 et 100, en particulier 90, et le second matériau a de préférence une dureté Shore A entre 20 et 70, en particulier entre 50 et 70, et de préférence le premier matériau et/ou le second matériau sont en outre de préférence choisis parmi un groupe de matériaux qui inclut : élastomères thermoplastiques réticulés (TPV), en particulier caoutchouc polypropylène/éthylène-propylène-diène (PP/EPDM), et/ou copolymères-bloc en styrène, en particuliers copolymères styrène-éthène butène-styrène (SEBS).

10. Profil d'étanchéité selon l'une des revendications 1 à 9, **caractérisé en ce que**, moins la zone de maintien (30), en particulier le profil d'étanchéité (16), est susceptible d'être fabriquée par extrusion, et de préférence la première branche (36) et/ou la seconde branche (38) et/ou la zone de base (40) sont exemptes de support de renforcement.

11. Agencement de porte, en particulier pour un camping-car (11) ou une caravane, comprenant
une paroi (12),
une porte (14), qui est capable de pivoter par rapport à la paroi (12) entre une position ouverte et une position fermée, et
un profil d'étanchéité (16) selon l'une des revendications 1 à 10, qui est fixé sur la paroi (12),
dans lequel un intervalle (21) qui se forme dans la position fermée entre la paroi (12) et la porte (14) est étanché au moins localement par la zone de contact (32) du profil d'étanchéité (16).

12. Agencement de porte selon la revendication 11, **caractérisé en ce que** la paroi (12) comprend une huisserie (20) sur laquelle est fixée la zone de maintien (30) du profil d'étanchéité (16), dans lequel l'huisserie (20) comporte de préférence au moins un évidement (26) dans lequel s'engage la nervure (44) de la zone de maintien (30).

13. Agencement de porte selon la revendication 12, **caractérisé en ce que** l'huisserie (20) est susceptible d'être réalisée par extrusion, et l'huisserie (20) est de préférence fabriquée en aluminium, et l'huisserie (20) est en outre de préférence incurvée au moins par portion.

14. Agencement de porte selon la revendication 12 ou 13, **caractérisé en ce que** l'huisserie (20) comporte une saillie de fixation (24) sur laquelle est prévu l'évidement (26), et dans lequel la saillie de fixation (24) comporte de préférence une pluralité d'évidements (26) dans lesquels s'engagent une pluralité de nervures (44) en coopération de formes.
